# EUROPÄISCHE PATENTSCHRIFT

(11) **EP 4 015 275 B1**
(45) Veröffentlichungstag und Bekanntmachung des Hinweises auf die Patenterteilung: **08.04.2026**
(21) Anmeldenummer: 20215928.1
(22) Anmeldetag: 21.12.2020
(51) Int. Cl.: B60K 17/16, B60K 17/35, F16D 15/00, F16H 48/08, F16D 11/14, F16D 27/09, F16D 27/118

(54) **DIFFERENTIALANORDNUNG**
DIFFERENTIAL ASSEMBLY
AGENCEMENT DIFFÉRENTIEL

(43) Veröffentlichungstag der Anmeldung: 22.06.2022
(73) Patentinhaber: GKN Automotive Limited, Birmingham, West Midlands B37 7YE (GB)
(72) Erfinder: ZINGERLE, Matthias, 39034 Toblach (IT); MAYR, Nikolaus, 39031 Bruneck (IT); SENONER, Sigmund, 39030 Pfalzen (BZ) (IT); PUTZER, Hanspeter, 39030 Gais (IT)
(74) Vertreter: Neumann Müller Oberwalleney Patentanwälte PartG mbB

(56) Entgegenhaltungen:
- DE-A1- 19 716 386
- US-A1- 2010 113 208
- US-A1- 2018 099 562

## Beschreibung

Die vorliegende Anmeldung betrifft eine Differentialanordnung, insbesondere für eine Antriebsachse eines Kraftfahrzeugs. Die Differentialanordnung umfasst ein Antriebsrad, ein Differentialgetriebe mit einem Eingangsteil und eine zwischen dem Antriebsrad und dem Differentialgetriebe wirksam angeordnete Schaltkupplung, wobei in geschlossenem Zustand der Schaltkupplung Drehmoment von dem Antriebsrad auf das Differentialgetriebe übertragen wird und in geöffnetem Zustand der Schaltkupplung eine Drehmomentübertragung unterbrochen ist. Ein erstes Kupplungsteil der Schaltkupplung ist mit dem Eingangsteil oder mit einem Differentialgehäuse des Differentialgetriebes fest verbunden und ein zweites Kupplungsteil der Schaltkupplung ist mit dem jeweils anderen des Eingangsteils und des Differentialgehäuses fest verbunden.

Aus der DE 10 2009 056 088 A1 ist eine Differentialanordnung bekannt. Die Differentialanordnung umfasst ein Antriebsrad; ein Differentialgetriebe mit einem Eingangsteil und zwei Ausgangsteilen, wobei die Ausgangsteile mit dem Eingangsteil antriebsverbunden sind und untereinander eine ausgleichende Wirkung haben. Eine Schaltkupplung ist zwischen dem Antriebsrad und dem Differentialgetriebe wirksam angeordnet, wobei in geschlossenem Zustand der Schaltkupplung Drehmoment von dem Antriebsrad auf das Differentialgetriebe übertragen wird und in geöffnetem Zustand der Schaltkupplung eine Drehmomentübertragung unterbrochen ist. Ein steuerbarer Aktuator ist zum Betätigen der Schaltkupplung und ein Sensor zur Ermittlung von zumindest drei Schaltstellungen der Schaltkupplung vorgesehen.

Aus der DE 10 2013 111 891 A1 ist eine Antriebsanordnung, insbesondere zum Einsatz im Antriebsstrang eines Kraftfahrzeugs, bekannt. Die Antriebsanordnung umfasst ein drehend antreibbares Gehäuse, ein Abtriebsteil und eine Kupplung, die zwischen dem drehend antreibbaren Gehäuse und dem Abtriebsteil angeordnet ist, wobei die Kupplung ein erstes Kupplungsteil aufweist, das relativ zum Gehäuse drehfest und axial beweglich gehalten ist, sowie ein zweites Kupplungsteil, das mit dem Abtriebsteil fest verbunden und in dem drehend antreibbaren Gehäuse angeordnet ist. Ein steuerbarer Aktuator ist zum Betätigen der Kupplung vorgesehen. Ein Geberelement ist bei Betätigung der Kupplung axial bewegbar und ein Sensor erfasst Schaltstellungen der Kupplung. Das erste Kupplungsteil weist einen Ringabschnitt auf, der außerhalb des Gehäuses angeordnet ist, und mehrere Nockenelemente, die sich axial von dem Ringabschnitt durch Öffnungen im Gehäuse in das Innere des Gehäuses hineinerstrecken.

Die DE 197 16 386 A1 betrifft eine Ausgleichsvorrichtung oder Differentialvorrichtung für ein Fahrzeug mit zuschaltbarem Vierradantrieb, wobei die Antriebskraft unterbrochen werden kann, wenn aus dem Vierradantrieb in den Zweiradantrieb geschaltet wird. Darüber hinaus weist die Ausgleichsvorrichtung einen Mechanismus zum Vermindern der Reibungsverluste der Vorrichtung auf, wenn diese nicht angetrieben wird. Die Ausgleichsvorrichtung ist in einem Ausgleichsträger drehbar aufgenommen, an dessen Seiten Abtriebswellen angeordnet sind, wobei die Antriebskraft des Motors unterbrochen ist, wenn aus dem Vierradantrieb in den Zweiradantrieb geschaltet wird, und die Antriebskraft des Motors auf die linke und die rechte Abtriebswelle des Fahrzeuges im Zustand des Vierradantriebs verteilbar ist. Ein äußeres Ausgleichsgehäuse ist mittels der Antriebskraft des Motors drehbar. Ein inneres Ausgleichsgehäuse ist in dem äußeren Ausgleichsgehäuse koaxial drehbar aufgenommen, wobei das innere Ausgleichsgehäuse im wesentlichen zylinderförmig ausgebildet ist. ein Kupplungsteil ist in dem äußeren Ausgleichsgehäuse benachbart zu dem inneren Ausgleichsgehäuse und in Axialrichtung des äußeren Ausgleichsgehäuses bewegbar aufgenommen, wobei das Kupplungsteil im wesentlichen zylinderförmig ausgebildet ist und mit dem äußeren Ausgleichsgehäuse zusammen drehbar mit diesem verbunden ist. Ein Paar von Klauen sind in dem äußeren Ausgleichsgehäuse miteinander in Eingriff bringbar und voneinander trennbar aufgenommen, wobei die eine Klaue an einer dem Kupplungsteil zugewandten axialen Stirnfläche des inneren Ausgleichsgehäuses angeordnet ist, und die andere Klaue an einer dem inneren Ausgleichsgehäuse zugewandten axialen Stirnfläche des Kupplungsteils angeordnet ist. Ein Ausgleichsgetriebesystem ist in dem inneren Ausgleichsgehäuse angeordnet, wobei das Ausgleichsgetriebesystem als Kegelradgetriebe ausgebildet ist. Betätigungsmittel sind zum Betätigen des Kupplungsteils derart vorgesehen, dass die Klauen in Verbindung mit dem Schaltvorgang zwischen dem Vierradantrieb und dem Zweiradantrieb des Fahrzeuges miteinander in Eingriff bringbar oder voneinander trennbar sind, wobei die Betätigungsmittel an dem Ausgleichsträger benachbart zu dem Kupplungsteil angebracht sind. In einem äußeren Wandabschnitt des äußeren Ausgleichsgehäuses kann eine Mehrzahl von Löchern vorgesehen sein, die in Umfangsrichtung angeordnet sind, wobei das Kupplungsteil mit einer Mehrzahl von Schenkeln versehen ist, die mit den jeweiligen Löchern derart in Eingriff bringbar sind, dass das Kupplungsteil mit dem äußeren Ausgleichsgehäuse zusammen drehbar verbunden ist. Die Löcher und die Schenkel weisen jeweils einander gegenüberliegende Seitenflächen auf, die in Axialrichtung der Ausgleichsvorrichtung konisch nach außen hin konvergierend ausgebildet sind, wodurch Nocken an den einander gegenüberliegenden Seitenflächen der jeweiligen Löcher und Schenkel vorhanden sind und die Klauen zum Eingriff miteinander bei Drehung des äußeren Ausgleichsgehäuses vorspannbar sind.

Die US 2018/099562 A1 offenbart eine Differentialvorrichtung mit einem Differentialgehäuse und einem ersten Eingriffsteil mit Eingriffszähnen an einer ersten Seitenwand des Differentialgehäuses. Ein Kupplungsbauteil ist zwischen der ersten Seitenwand und einer zweiten Seitenwand des Differentialgehäuses in einer Axialrichtung angeordnet. Das Kupplungsbauteil hat einen zweiten Eingriffsteil. Ein Drängbauteil ist zwischen der zweiten Seitenwand und dem Kupplungsbauteil derart angeordnet, dass das Drängbauteil in der Axialrichtung zusammengedrückt ist. Wenn ein Stellglied keine Druckkraft erzeugt, sind der erste Eingriffsteil und der zweite Eingriffsteil durch die Drängkraft des Drängbauteils miteinander im Eingriff und das Differentialgehäuse und das Eingangsbauteil sind über das Kupplungsbauteil miteinander verbunden. Der erste Eingriffsteil wird von dem zweiten Eingriffsteil durch eine Druckkraft bei Betätigung des Stellglieds außer Eingriff gebracht.

Die US 10 012 300 B2 offenbart eine gekuppelte Komponente vor, die ein erstes Element, ein zweites Element und eine Kupplung umfasst. Das erste Element kann einen Ausgangsabschnitt haben. Das zweite Element kann einen Eingangsabschnitt aufweisen, der innerhalb des Ausgangsabschnitts angeordnet ist. Die Kupplung kann mehrere erste Sperrelemente und ein Steuerelement zum Koordinieren einer radial nach innen gerichteten Bewegung der ersten Sperrelemente umfassen, um den Ausgangsabschnitt und den Eingangsabschnitt antriebsmäßig zu koppeln.

Ein axial bewegliches Kupplungsteil, das entweder innerhalb des Differentialgehäuses angeordnet ist und über sich axial durch Öffnungen aus dem Inneren des Differentialgehäuses hinauserstreckende Elemente betätigt wird oder das zumindest teilweise außerhalb des Differentialgehäuses angeordnet ist und über sich axial durch Öffnungen in das Innere des Differentialgehäuses hineinerstreckende Elemente mit einem weiteren Kupplungsteil drehmomentübertragend verbunden wird, ist einer hohen mechanischen Belastung ausgesetzt und daher aufwändig in der Gestaltung und teuer in der Produktion.

Eine Aufgabe kann darin bestehen, eine Differentialanordnung zur Verfügung zu stellen, bei der die Kupplungsteile einfacher gestaltet sein können.

Die Aufgabe wird durch jeden der Gegenstände der unabhängigen Ansprüche 1, 6 und 9 gelöst.

Alle drei Lösungen bestehen in einer Differentialanordnung, insbesondere für eine Antriebsachse eines Kraftfahrzeugs, umfassend ein Antriebsrad, ein Differentialgetriebe mit einem Eingangsteil und eine zwischen dem Antriebsrad und dem Differentialgetriebe wirksam angeordnete Schaltkupplung, wobei in geschlossenem Zustand der Schaltkupplung Drehmoment von dem Antriebsrad auf das Differentialgetriebe übertragen wird und in geöffnetem Zustand der Schaltkupplung eine Drehmomentübertragung unterbrochen ist, wobei ein erstes Kupplungsteil der Schaltkupplung mit einem Differentialgehäuse des Differentialgetriebes und ein zweites Kupplungsteil der Schaltkupplung mit dem Eingangsteil fest verbunden ist. Die Schaltkupplung weist relativ zu dem ersten Kupplungsteil und zu dem zweiten Kupplungsteil verschiebbare Koppelglieder und zumindest ein auf die Koppelglieder wirkendes Schaltelement auf, wobei das Schaltelement die Koppelglieder zwischen einer ersten Position für den geschlossenem Zustand der Schaltkupplung, in dem die Koppelglieder drehmomentübertragend zwischen dem ersten Kupplungsteil und dem zweiten Kupplungsteil angeordnet sind, und einer zweiten Position für den geöffnetem Zustand der Schaltkupplung, in dem das erste Kupplungsteil von dem zweiten Kupplungsteil getrennt ist, verschiebt, wobei mindestens sechs Koppelglieder vorgesehen sind.

Mit Eingangsteil des Differentialgetriebes ist beispielsweise ein Differentialträger gemeint, der auch als Differentialkorb bezeichnet wird. Ausgangsteile der Differentialanordnung können bei Verwendung eines Kegelraddifferentials oder Kronenraddifferentials Seitenwellenräder sein, oder bei Verwendung eines Planetenraddifferentials auch ein Hohlrad oder Sonnenrad. Die Schaltkupplung ist insbesondere als formschlüssige Kupplung gestaltet.

Ein Vorteil der Differentialanordnung besteht darin, dass durch die relativ zu dem ersten Kupplungsteil und zu dem zweiten Kupplungsteil verschiebbaren Koppelglieder die drehmomentübertragende Verbindung hergestellt und getrennt werden kann, ohne eines der Kupplungsteile bewegbar zu machen. Dadurch lässt sich mindestens eines der Kupplungsteile einfacher gestalten. Insbesondere muss kein Kupplungsteil von einem Aktuator betätigt werden. Dass bei der Schaltkupplung mindestens sechs Koppelglieder vorgesehen sind, hat den Vorteil, dass die Drehmomentübertragung auf die Koppelglieder aufgeteilt ist, so dass jedes einzelne Koppelglied weniger aufwändig im Hinblick auf seine Festigkeit gefertigt sein kann. Die Koppelglieder können beispielsweise gleichmäßig über den Umfang der Schaltkupplung verteilt sein. Die Drehmomentbelastung verteilt sich dann vorteilhaft gleichmäßig auf alle Koppelglieder. Die Verwendung einer größeren Anzahl kleiner Koppelglieder erlaubt eine Einsparung an Bauraum, der für die Schaltkupplung benötigt wird. Höhere Drehmomente können vorteilhaft über eine größere Anzahl von Koppelgliedern übertragen werden. Die Schaltkupplung ist dadurch vorteilhaft skalierbar. Es können insbesondere mindestens 8 Koppelglieder vorgesehen sein. Denkbar sind bis zu 20 Koppelglieder, bei entsprechend größeren Differentialanordnungen auch mehr.

Die Übertragung des Drehmoments erfolgt direkt von dem ersten Kupplungsteil auf die Koppelglieder oder umgekehrt. Desgleichen erfolgt die Übertragung des Drehmoments direkt von dem zweiten Kupplungsteil auf die Koppelglieder oder umgekehrt. Erfindungsgemäß ist vorgesehen, dass die Koppelglieder in Öffnungen des ersten Kupplungsteils oder des zweiten Kupplungsteils geführt sind, wobei in geschlossenem Zustand der Schaltkupplung das Schaltelement in der ersten Position die Koppelglieder aus den Öffnungen hervortreten lässt, sodass die Koppelglieder in Ausnehmungen des jeweils anderen des ersten Kupplungsteils und des zweiten Kupplungsteils eingreifen. In geöffnetem Zustand der Schaltkupplung lässt das Schaltelement in der zweiten Position die Koppelglieder aus den Ausnehmungen in die Öffnungen zurücktreten. Die Koppelglieder treten aus den Öffnungen hervor, indem sie über eine äußere Kontur des jeweiligen Kupplungsteils zumindest in einer Richtung hinausragen, ohne vollständig außerhalb des Kupplungsteils positioniert zu sein. Als in die Öffnungen zurückgetreten gilt das Koppelglied, wenn es zumindest nicht in derselben Richtung über die Kontur des Kupplungsteils hinausragt.

Das Schaltelement ist beispielsweise koaxial zu dem ersten Kupplungsteil gehalten und axial zwischen der ersten Position und der zweiten Position verschiebbar. Ein insbesondere steuerbarer Aktuator kann zum Betätigen der Schaltkupplung vorgesehen sein, wobei der Aktuator vorteilhaft auf das Schaltelement wirkt und dieses von der zweiten Position in die erste Position bewegt. Der Aktuator kann das Schaltelement optional auch von der ersten Position in die zweite Position bewegen, wobei das Schaltelement alternativ auch mittels einer Feder in Richtung der zweiten Position vorgespannt sein kann. Vorteilhaft wirkt der Aktuator auf das Schaltelement, welches nicht an der Drehmomentübertragung zwischen den Kupplungsteilen teilnimmt. Somit kann das Schaltelement als bewegbares Teil einfach gestaltet sein, da es vergleichsweise geringer mechanischer Belastung ausgesetzt ist. Als axial, koaxial und radial werden in allen Ausführungsformen Raumrichtungen bzw. Ausrichtungen von Bauteilen bezeichnet, die sich auf eine Drehachse des Differentialgetriebes bezieht, um die beispielsweise das Antriebsrad, das Eingangsteil und die Seitenwellenräder rotieren, soweit nichts eine andere Achse ausdrücklich als Bezug angegeben ist.

Gemäß einer Ausführungsform ist vorgesehen, dass die Koppelglieder als Kugeln oder als Zylinderstifte ausgeführt sind. Ein Durchmesser der Kugeln oder der Zylinderstifte kann zwischen fünf und fünfzehn Millimeter betragen, insbesondere zwischen acht und zwölf Millimeter. Die Übertragung des Drehmoments erfolgt direkt von dem ersten Kupplungsteil auf die sphärische oder zylindrische Oberfläche der Koppelglieder oder umgekehrt. Desgleichen erfolgt die Übertragung des Drehmoments direkt von dem zweiten Kupplungsteil auf die sphärische oder zylindrische Oberfläche der Koppelglieder oder umgekehrt. Als Zylinderstift ist ein Stift von in im Wesentlichen zylindrischer Form zu verstehen, der gegebenenfalls in Längsrichtung oder Umfangsrichtung Nuten oder ähnliche Ausnehmungen aufweisen kann.

Gemäß der ersten und der zweiten Lösung ist vorgesehen, dass die Koppelglieder axial verschiebbar in axialen Öffnungen des ersten Kupplungsteils geführt sind. Die axialen Öffnungen des ersten Kupplungsteils sind beispielsweise als axial durchgehende Bohrungen des Differentialgehäuses gestaltet. Das Schaltelement kann so einen von außerhalb des Differentialgehäuses auf die Koppelglieder wirkenden Ringabschnitt aufweisen.

Gemäß der ersten Lösung ist vorgesehen, dass die Koppelglieder als Zylinderstifte ausgeführt sind und axial verschiebbar in den axialen Öffnungen des ersten Kupplungsteils geführt sind. Die Zylinderstifte als Koppelglieder können mit dem Schaltelement fest verbunden sein. Beispielsweise sind die Koppelglieder in axialer Richtung formschlüssig mit dem Schaltelement verbunden. Vorteilhaft kann das Schaltelement als Geberelement für einen Sensor zur Ermittlung von Schaltstellungen der Schaltkupplung dienen.

Die Zylinderstifte als Koppelglieder können an ihrem dem zweiten Kupplungsteil zugewandten Ende konische Kopfbereiche aufweisen, wobei die Kopfbereiche sich in axialer Richtung von dem zweiten Kupplungsteil zu dem ersten Kupplungsteil hin verjüngen. Weiterhin können die Ausnehmungen des zweiten Kupplungsteils sich in axialer Richtung von einer dem ersten Kupplungsteil zugewandten Oberfläche in das zweite Kupplungsteil hinein aufweiten. Die konischen Kopfbereiche und/oder die sich aufweitenden Ausnehmungen sind vorteilhaft geeignet, die Koppelglieder durch ausreichende Reibungskräfte zwischen den konischen Kopfbereichen und Wandungen der Ausnehmungen in den Ausnehmungen zu halten, um ein unbeabsichtigtes Trennen der Schaltkupplung zu vermeiden, insbesondere wenn geringe oder keine Drehmomente über die Koppelglieder zwischen dem ersten Kupplungsteil und dem zweiten Kupplungsteil übertragen werden.

Gemäß der ersten Lösung ist vorgesehen, dass die Ausnehmungen des zweiten Kupplungsteils als Langlöcher ausgeführt sind, deren größte Erstreckung in Umfangsrichtung angeordnet ist, sodass ein Verstellen der zylindrischen Koppelglieder in die erste Position erleichtert wird. Eine Anzahl der Ausnehmungen des zweiten Kupplungsteils kann größer sein als die Anzahl an Koppelgliedern, beispielsweise um ein ganzzahliges Vielfaches der Anzahl an Koppelgliedern.

Gemäß der zweiten Lösung ist vorgesehen, dass das zumindest eine Schaltelement in die axialen Öffnungen eingreifende Zapfen aufweist, wobei die Koppelglieder als Kugeln ausgeführt sind. In geschlossenem Zustand der Schaltkupplung werden die Koppelglieder von den Zapfen in den Ausnehmungen des zweiten Kupplungsteils gehalten. In den axialen Öffnungen können Führungshülsen zur Führung der Koppelglieder angeordnet sein.

Gemäß der dritten Lösung ist vorgesehen, dass die Koppelglieder radial verschiebbar in radialen Öffnungen des zweiten Kupplungsteils geführt sind. Das zumindest eine Schaltelement weist eine auf die Koppelglieder wirkenden Schaltkontur auf, um die Koppelglieder zu verschieben. Die Schaltkontur lässt die Koppelglieder in der zweiten Position in die radialen Öffnungen des zweiten Kupplungsteils zurücktreten und schiebt sie in der ersten Position teilweise aus den radialen Öffnungen heraus.

Die radialen Öffnungen des zweiten Kupplungsteils können dabei als radial durchgehende Bohrungen des Eingangsteils gestaltet sein. In geschlossenem Zustand der Schaltkupplung werden die Koppelglieder radial von dem zumindest einen Schaltelement verriegelt. Dies gelingt besonders vorteilhaft, wenn das Schaltelement radial zwischen dem zweiten Kupplungsteil und dem Differentialgehäuse angeordnet ist. Das zumindest eine Schaltelement kann dabei einen hülsenförmigen Abschnitt mit der Schaltkontur aufweisen. Alternativ kann das Schaltelement auch durch ringförmig angeordnete Stifte aufweisen, wobei je ein Stift auf ein Koppelglied wirkt.

Das zumindest eine Schaltelement weist beispielsweise mindestens einen sich axial durch einen Durchbruch des Differentialgehäuses hindurch erstreckenden Ansatz auf, wobei das Schaltelement über den mindestens einen Ansatz von dem Aktuator betätigt werden kann. Der mindestens eine Ansatz kann weiterhin beispielsweise mit einem Geberelement für einen Sensor zur Ermittlung von Schaltstellungen der Schaltkupplung verbunden sein.

Ausführungsbeispiele werden nachstehend anhand der Zeichnungsfiguren erläutert. Hierin zeigt:
Fig. 1 eine Differentialanordnung mit Schaltkupplung gemäß der dritten lösung im Längsschnitt in geöffneter Schaltposition der Schaltkupplung;
Fig. 2 die Differentialanordnung gemäß Fig. 1 in geschlossener Schaltstellung der Schaltkupplung;
Fig. 3 die die Differentialanordnung gemäß Fig. 2 in perspektivischer Ansicht;
Fig. 4 die Differentialanordnung gemäß Fig. 2 im Querschnitt;
Fig. 5 eine Differentialanordnung mit Schaltkupplung gemäß der zweiten Lösung im Längsschnitt in geöffneter Schaltposition der Schaltkupplung;
Fig. 6 die Differentialanordnung gemäß Fig. 5 in perspektivischer Ansicht;
Fig. 7 ein Detail der Differentialanordnung gemäß Fig. 5 im Längsschnitt;
Fig. 8 die Differentialanordnung gemäß Fig. 5 in geschlossener Schaltstellung der Schaltkupplung;
Fig. 9 das Detail gemäß Figur 7 in geschlossener Schaltstellung der Schaltkupplung;
Fig. 10 eine Differentialanordnung mit Schaltkupplung gemäß der ersten Lösung im Längsschnitt in geöffneter Schaltposition der Schaltkupplung;
Fig. 11 die Differentialanordnung gemäß Fig. 10 in perspektivischer Ansicht;
Fig. 12 ein Detail der Differentialanordnung gemäß Fig. 10 im Längsschnitt;
Fig. 13 die Differentialanordnung gemäß Fig. 10 in geschlossener Schaltstellung der Schaltkupplung;
Fig. 14 die Differentialanordnung gemäß Fig. 13 in perspektivischer Ansicht;
Fig. 15 das Detail gemäß Figur 12 vergrößerter Ansicht;
Fig. 16 die Differentialanordnung gemäß Fig. 10 im Querschnitt;
Fig. 17 das Detail gemäß Figur 15 gemäß einer alternativen Ausführungsform;
Fig. 18 ein Detail der Differentialanordnung gemäß Fig. 10 in perspektivischer Ansicht;
Fig. 19 das Detail gemäß Fig. 18 in einer weiteren perspektivischer Ansicht;
Fig. 20 das Detail gemäß Fig. 18 in einer weiteren perspektivischer Ansicht;
Fig. 21 eine Antriebsanordnung mit der Differentialanordnung in schematischer Darstellung.

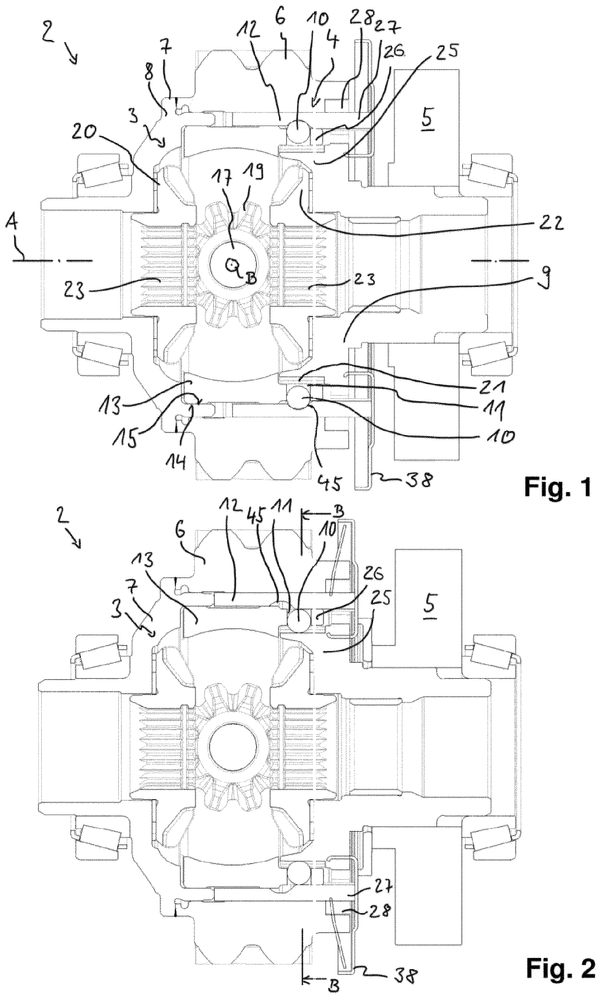

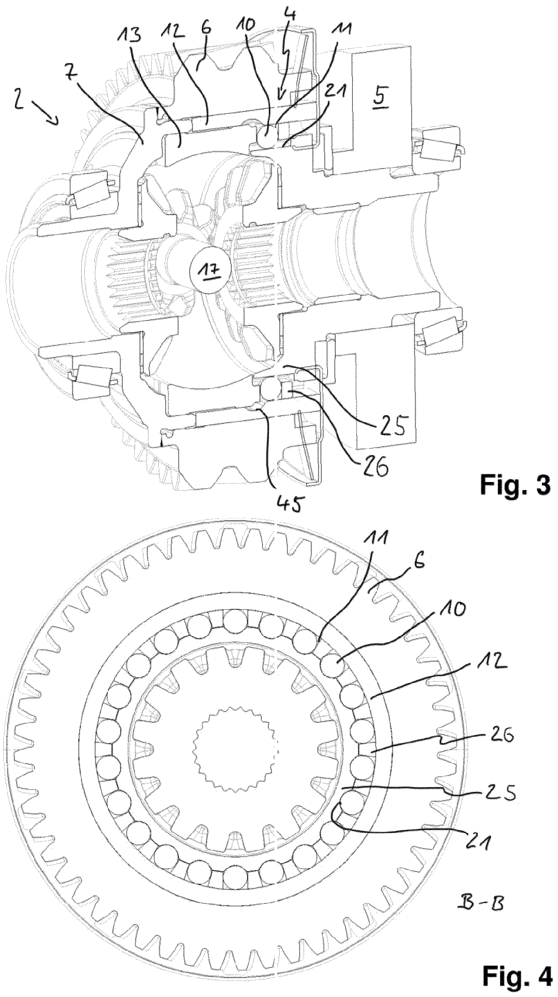

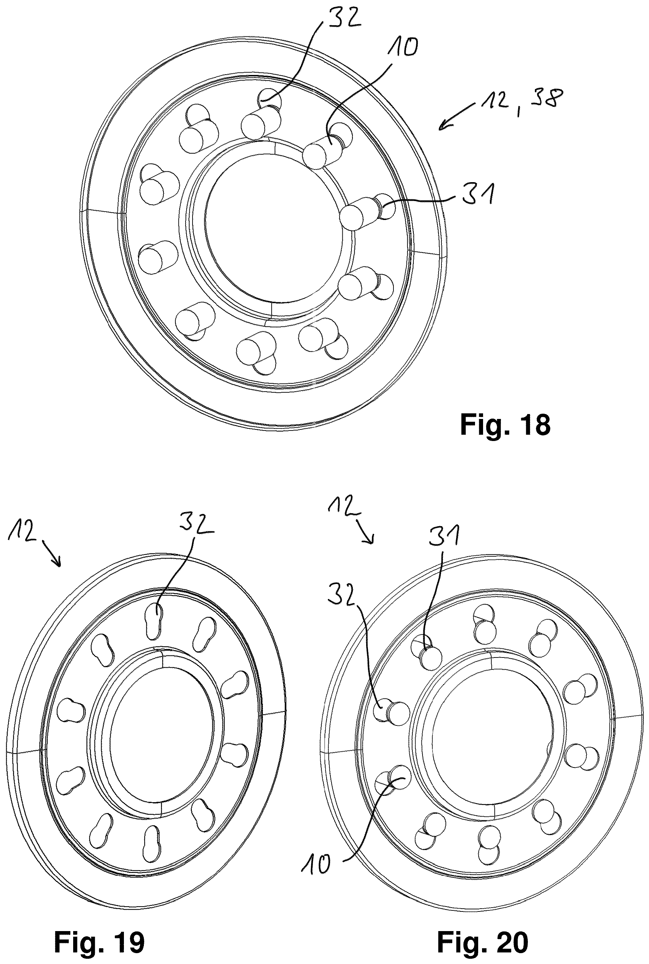

Die Figuren 1 bis 4 zeigen eine erfindungsgemäße Differentialanordnung 2 für eine Antriebsachse in einer Antriebsanordnung eines Kraftfahrzeugs gemäß Figur 20 in einer ersten Ausführungsform und werden im Folgenden zunächst gemeinsam beschrieben. Figur 1 zeigt die Differentialanordnung 2 mit einer Schaltkupplung 4 in geöffneter Schaltposition der Schaltkupplung 4 in einem Längsschnitt. Figur 2 zeigt den Längsschnitt der Differentialanordnung in geschlossener Schaltstellung der Schaltkupplung 4. Figur 3 zeigt die Differentialanordnung in perspektivischer Ansicht und Figur 4 einen Querschnitt entlang der Linie B-B in Figur 1. Es ist eine Differentialanordnung 2 gezeigt, die ein Differentialgetriebe 3, eine Schaltkupplung 4 sowie einen Aktuator 5 zum Betätigen der Schaltkupplung 4 aufweist. Zum Einleiten eines Drehmoments von einem hier nicht dargestellten Antriebsmotor ist ein Antriebsrad 6 vorgesehen, das fest mit einem Differentialgehäuse 7 verbunden ist. Das Differentialgehäuse 7 ist zweiteilig aufgebaut und umfasst ein erstes topfförmiges Gehäuseteil 8 und ein zweites topfförmiges Gehäuseteil 9, wobei das zweite Gehäuseteil 9 einteilig mit dem Antriebsrad 6 ausgeführt ist. Das erste Gehäuseteil 8 ist mit dem zweiten Gehäuseteil 9 fest verbunden, insbesondere mittels Schweißen. Dabei versteht es sich, dass die Verbindung zwischen dem Antriebsrad 6 und dem Differentialgehäuse 7, bzw. zwischen dem ersten Gehäuseteil 8 und dem zweiten Gehäuseteil 9 auch auf andere Weise geschehen kann, beispielsweise durch Schraubverbindungen oder andere übliche Verbindungsmittel. In dem Differentialgehäuse 7 ist das Differentialgetriebe 3 angeordnet, das um eine Drehachse A drehend antreibbar ist.

Das Differentialgetriebe 3 umfasst einen Differentialträger 13, der eine im wesentlichen zylindrische Außenfläche 14 aufweist, mit der der Differentialträger 13 gegenüber einem entsprechenden innenzylindrischen Flächenabschnitt 15 des ersten Gehäuseteils 8 um die Drehachse A drehbar gleitgelagert ist. In dem Differentialträger 13 sind zwei Bohrungen vorgesehen, in die ein Zapfen 17 eingesteckt ist. Auf dem Zapfen 17 sind zwei Differentialräder 19 um eine Zapfenachse B drehbar gelagert. Die beiden Differentialräder 19 sind mit einem ersten und einem zweiten Seitenwellenrad 20, 22 in Verzahnungseingriff, die koaxial zur Drehachse A angeordnet sind. Die beiden Seitenwellenräder 20, 22 haben jeweils eine Längsverzahnung 23, in die eine entsprechende Gegenverzahnung einer Seitenwelle (Figur 20) zur Drehmomentübertragung eingesteckt werden kann. Das erste Seitenwellenrad 20 ist gegenüber dem ersten Gehäuseteil 8 axial abgestützt, wobei vorzugsweise zwischen dem ersten Seitenwellenrad 20 und der Stützfläche des ersten Gehäuseteils 8 eine Gleitscheibe angeordnet ist. Entsprechend ist zwischen dem zweiten Seitenwellenrad 22 und dem zweiten Gehäuseteil 9 ebenfalls eine Gleitscheibe zur Abstützung der axialen Kräfte angeordnet.

Die Schaltkupplung 4 ist vorliegend in Form einer formschlüssigen Kupplung gestaltet. Die formschlüssige Schaltkupplung 4 umfasst ein erstes Kupplungsteil 25, das mit dem Differentialgehäuse 7 und ein zweites Kupplungsteil 26, das mit dem Eingangsteil 13 fest verbunden ist, sowie zehn Koppelglieder 10, die relativ zu dem ersten Kupplungsteil 25 und zu dem zweiten Kupplungsteil 26 verschiebbar sind, und ein auf die zehn Koppelglieder 10 wirkendes Schaltelement 12. In geschlossenem Zustand der Schaltkupplung 4 wird ein Drehmoment zwischen dem ersten Kupplungsteil 25 und dem zweiten Kupplungsteil 26 über die Koppelglieder 10 übertragen, während in geöffnetem Zustand der Schaltkupplung 4 die Koppelglieder 10 kein Drehmoment übertragen. In der Figur 1 ist die Schaltkupplung 4 in geschlossenem Zustand dargestellt. Das Schaltelement 12 befindet sich in einer ersten Position, in der es die Koppelglieder 10 drehmomentübertragend zwischen dem ersten Kupplungsteil 25 und dem zweiten Kupplungsteil 26 hält. In der Figur 2 ist die Schaltkupplung 4 in geöffnetem Zustand dargestellt. Das Schaltelement 12 befindet sich in einer zweiten Position, in der es die Koppelglieder 10 freigibt, sodass das erste Kupplungsteil 25 von dem zweiten Kupplungsteil 26 getrennt ist und die Drehmomentübertragung unterbrochen ist. Die Koppelglieder 10 sind in Öffnungen 11, entweder des ersten Kupplungsteils 25 oder des zweiten Kupplungsteils 26 geführt, wobei in geschlossenem Zustand der Schaltkupplung 4 das Schaltelement 12 in seiner zweiten Position die Koppelglieder 10 aus den Öffnungen 11 hervortreten lässt, sodass die Koppelglieder 10 in Ausnehmungen 21 des jeweils anderen des ersten Kupplungsteils 25 und des zweiten Kupplungsteils 26 eingreifen. In geöffnetem Zustand der Schaltkupplung 4 lässt das Schaltelement 12 in seiner zweiten Position die Koppelglieder aus den Ausnehmungen 21 in die Öffnungen 11 zurücktreten. Das Schaltelement 12 ist koaxial zu dem ersten Kupplungsteil 25 gehalten und in axialer Richtung zwischen der ersten Position und der zweiten Position verschiebbar. Ein steuerbarer Aktuator 5 ist zum Betätigen der Schaltkupplung 4 vorgesehen, indem das Schaltelement 12 von der zweiten Position in die erste Position bewegt wird.

In dem Ausführungsbeispiel gemäß der Figuren 1 bis 4 sind die zehn Koppelglieder 10 als radial verschiebbar in radialen Öffnungen 11 des zweiten Kupplungsteils 26 geführte Kugeln ausgeführt. Das Schaltelement 12 weist eine auf die Koppelglieder 10 wirkenden Schaltkontur 45 auf. Als Schaltkontur 45 ist hier eine Aufnahme vorgesehen, in welche die kugelförmigen Koppelglieder 10 zurückweichen können. Wird das Schaltelement 12 axial aus der zweiten Position in die erste Position verstellt, so drückt die Schaltkontur 45 die Koppelglieder 10 nach Art eines Ziehkeils über die äußere Kontur des zweiten Kupplungsteils 26 hinaus aus den Öffnungen 11 heraus, welche als radial durchgehende Bohrungen des Eingangsteils 13 gestaltet sind. In geschlossenem Zustand der Schaltkupplung 4 werden die Koppelglieder 10 radial von dem zumindest einen Schaltelement 12 verriegelt, das radial zwischen dem zweiten Kupplungsteil 26 und dem Differentialgehäuse 7 angeordnet ist.

Das Schaltelement 12 weist mindestens einen sich axial durch einen Durchbruch 28 des Differentialgehäuses 7 hindurch erstreckenden Ansatz 27 auf, sodass das Schaltelement 12 über den mindestens einen Ansatz 27 von dem Aktuator 5 betätigbar ist. Der mindestens einen Ansatz 27 ist weiterhin mit einem Geberelement 38 für einen Sensor (44, Figur 20) zur Ermittlung von Schaltstellungen der Schaltkupplung 4 verbunden. Zwischen dem Differentialgehäuse 7 und dem Geberelement 38 ist eine Rückstellfeder 43 angeordnet. Die Rückstellfeder 43 ist vorliegend in Form einer Tellerfeder gestaltet, wobei es sich versteht, dass auch andere Formen von Federn, beispielsweise Schraubenfedern, eingesetzt werden können. Das Schaltelement 12 kann einen hülsenförmigen Abschnitt mit der Schaltkontur 45 aufweisen, wobei sich axial von dem hülsenförmigen Abschnitt der oder die Ansätze 27 erstrecken. Alternativ kann die Schaltkontur 45 auch an koaxial ringförmig angeordneten axialen Stiften angeordnet sein, wobei je ein Stift einem Koppelglied 10 zugeordnet ist.

Der Sensor 44 (Figur 20) ist axial im Bereich des Aktuators 5 angeordnet und wirkt mit dem Geberelement 38 zusammen. Der Sensor 44 kann in Form eines Hallsensors gestaltet, der den Abstand zum Geberelement 38 berührungslos erfassen kann. Es kann aber auch ein anderer berührungsloser Sensor eingesetzt werden, beispielsweise ein induktiver Sensor. In der geöffneten Stellung der Schaltkupplung 4 ist das Geberelement 38 an den Sensor 44 axial angenähert. Diese Stellung, bei der Schaltkupplung 4 geöffnet ist, ist in der Figur 1 gezeigt. In der Figur 2 ist demgegenüber ein Schaltzustand gezeigt, bei dem die Schaltkupplung 4 zur Drehmomentübertragung vom Antriebsrad 6 auf den Differentialträger 13 in eingerücktem Zustand ist. Es ist erkennbar, dass das Geberelement 38 gegenüber dem Sensor 44 zusammen mit dem Schaltelement 12 in Richtung zum ersten Kupplungsteil 25 bzw. zum Differentialgetriebe 3 bewegt ist.

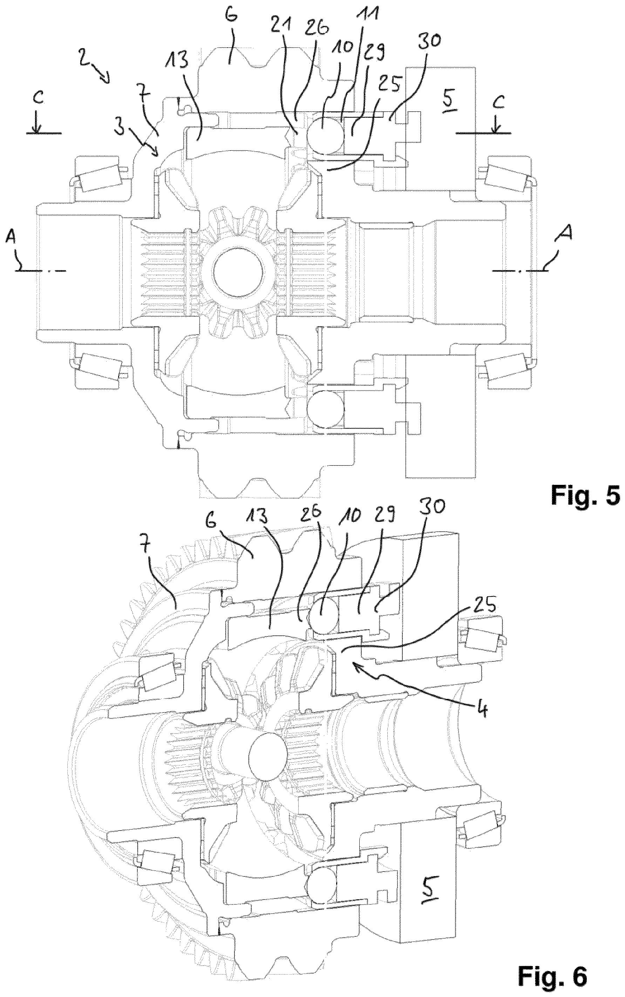

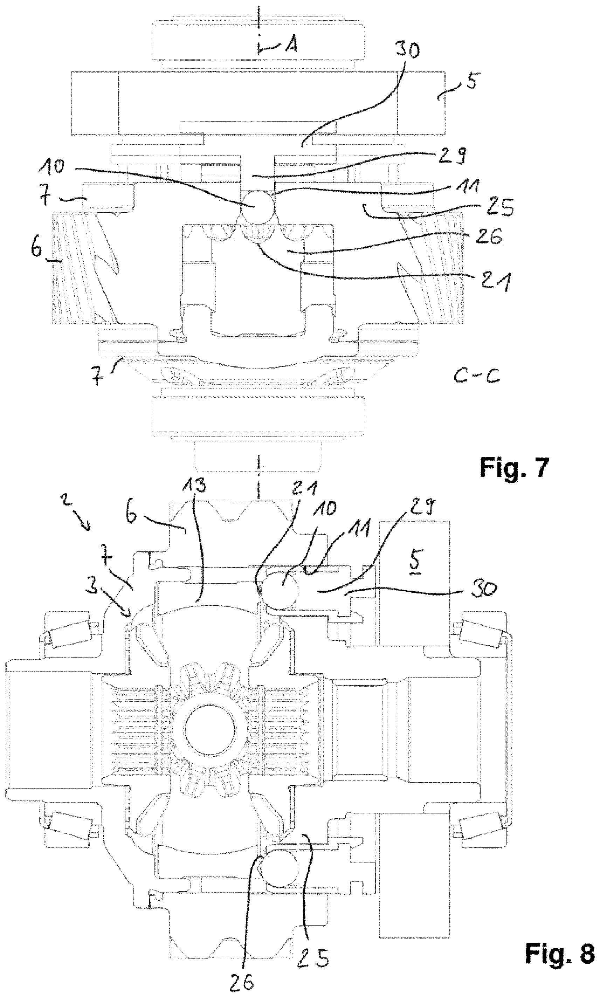

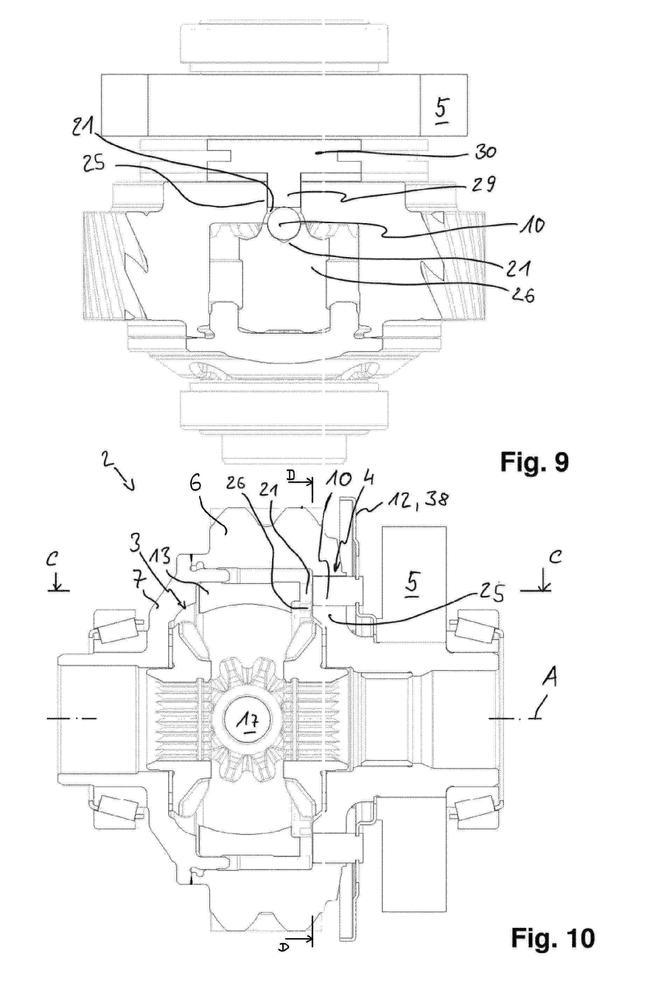

Die Figuren 5 bis 9 zeigen ein weiteres Ausführungsbeispiel der Differentialanordnung 2. Dieses entspricht weitgehend der Ausführungsform gemäß den Figuren 1 bis 4, so dass hinsichtlich der Gemeinsamkeiten auf die obige Beschreibung Bezug genommen wird. Dabei sind gleiche bzw. abgewandelte Bauteile mit gleichen Bezugsziffern versehen, wie in den Figuren 1 bis 4. Figur 5 zeigt die Differentialanordnung 2 mit der Schaltkupplung 4 in geöffneter Schaltposition der Schaltkupplung. Figur 6 zeigt die Differentialanordnung in perspektivischer Ansicht. Figur 7 zeigt ein Detail der Differentialanordnung in einem Längsschnitt entlang der Linie C-C in Figur 5. Die Figur 8 zeigt die Differentialanordnung 2 in geschlossener Schaltstellung der Schaltkupplung 4 und Figur 9 das Detail der Differentialanordnung in einem Längsschnitt entlang der Linie C-C in Figur 7. Im Folgenden wird mit Bezug auf die Figuren 5 bis 9 auf die Unterschiede eingegangen.

Die Besonderheit der vorliegenden Ausführungsform liegt darin, dass die kugelförmigen Koppelglieder 10 axial verschiebbar in axialen Öffnungen 11 des ersten Kupplungsteils 25 geführt sind, wobei das zumindest eine Schaltelement 12 in die axialen Öffnungen 11 eingreifende Zapfen 29 aufweist, die auf die Koppelglieder 10 wirken. In den Figuren 6, 8 und 9 ist die Schaltkupplung 4 in geschlossenem Zustand dargestellt. Das Schaltelement 12 befindet sich in der ersten Position, in der es die Koppelglieder 10 drehmomentübertragend zwischen dem ersten Kupplungsteil 25 und dem zweiten Kupplungsteil 26 hält. In den Figuren 5 und 7 ist die Schaltkupplung 4 in geöffnetem Zustand dargestellt. Das Schaltelement 12 befindet sich in der zweiten Position, in der es die Koppelglieder 10 freigibt, sodass das erste Kupplungsteil 25 von dem zweiten Kupplungsteil 26 getrennt ist und die Drehmomentübertragung unterbrochen ist. In geschlossenem Zustand der Schaltkupplung 4 lässt das Schaltelement 12 in seiner ersten Position die Koppelglieder 10 aus den axialen Öffnungen 11 hervortreten, sodass die Koppelglieder 10 in die Ausnehmungen 21 des zweiten Kupplungsteils 26 eingreifen. In geöffnetem Zustand der Schaltkupplung 4 lässt das Schaltelement 12 in seiner zweiten Position die Koppelglieder aus den Ausnehmungen 21 in die Öffnungen 11 zurücktreten. Das Schaltelement 12 ist koaxial zu dem zweiten Kupplungsteil 26 gehalten und in axialer Richtung zwischen der ersten Position und der zweiten Position verschiebbar.

In geschlossenem Zustand der Schaltkupplung 4 werden die Koppelglieder 10 von den Zapfen 29 in den Ausnehmungen 21 des zweiten Kupplungsteils 26 gehalten. Die axialen Öffnungen 11 des ersten Kupplungsteils 25 sind hier als axial durchgehende Bohrungen des Differentialgehäuses 7 gestaltet. Das Schaltelement 12 weist einen von außerhalb des Differentialgehäuses 7 auf die Zapfen 29 wirkenden Ringabschnitt 30 auf. Der Aktuator 5 wirkt zur Betätigung des Schaltelements 12 direkt auf den Ringabschnitt 30. Das Geberelement 38 kann an dem Ringabschnitt 30 angeordnet sein oder der Ringabschnitt selbst dient als Geberelement 38.

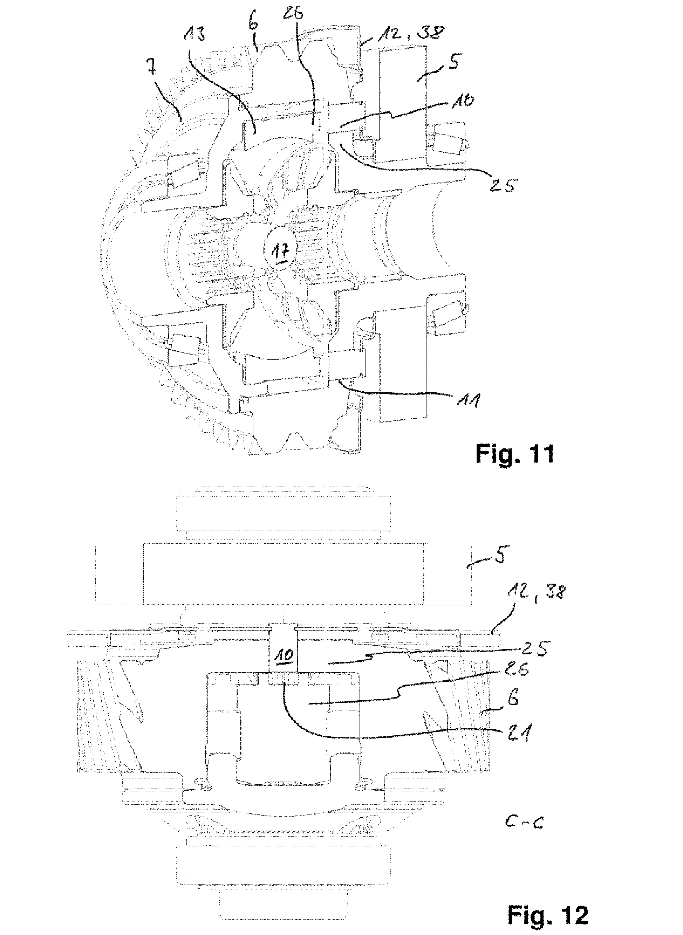

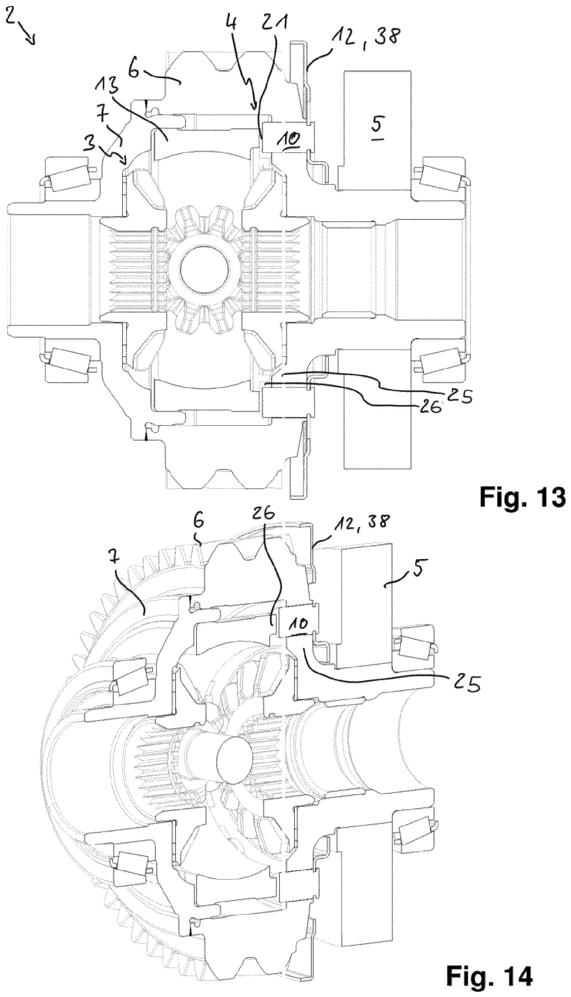

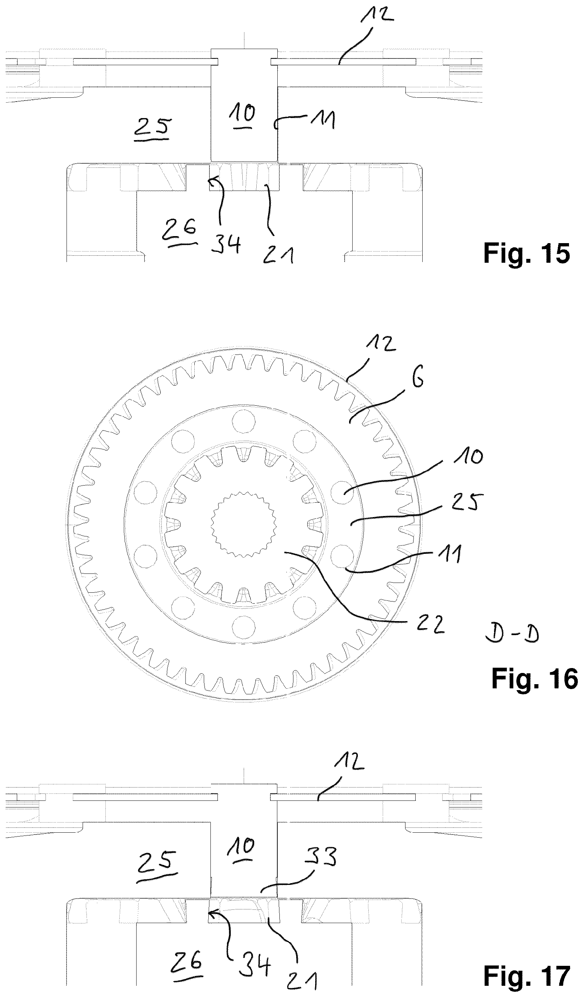

Die Figuren 10 bis 20 zeigen ein weiteres Ausführungsbeispiel der Differentialanordnung 2. Dieses entspricht weitgehend der Ausführungsform gemäß den Figuren 5 bis 9, so dass hinsichtlich der Gemeinsamkeiten auf die obige Beschreibung Bezug genommen wird. Dabei sind gleiche bzw. abgewandelte Bauteile mit gleichen Bezugsziffern versehen, wie in den Figuren 1 bis 9. Im Folgenden wird auf die Unterschiede eingegangen. Figur 10 zeigt die Differentialanordnung 2 mit der Schaltkupplung 4 im Längsschnitt in geöffneter Schaltposition der Schaltkupplung 4. Figur 11 zeigt die Differentialanordnung in perspektivischer Ansicht. Die Figur 12 zeigt ein Detail der Differentialanordnung 2 in einem Längsschnitt entlang der Linie C-C in Figur 10. In Figur 13 ist die Differentialanordnung 2 in geschlossener Schaltstellung der Schaltkupplung 4 dargestellt. Figur 14 zeigt die Differentialanordnung 2 in perspektivischer Ansicht. In der Figur 15 ist das Detail aus Figur 12 in vergrößerter Ansicht dargestellt, während Figur 17 das Detail in einer alternativen Ausführungsform zeigt. Die Figur 16 zeigt die Differentialanordnung 2 in einem Querschnitt entlang der Linie D-D in Figur 10. Die Figuren 18 bis 20 zeigen ein Detail der Differentialanordnung 2 in verschiedenen Ansichten. Im Folgenden wird mit Bezug auf die Figuren 10 bis 20 auf die Unterschiede eingegangen.

Bei dem Ausführungsbeispiel sind zehn der Koppelglieder 10 vorgesehen, die axial verschiebbar in axialen Öffnungen 11 des ersten Kupplungsteils 25 geführt sind. Die Besonderheit der vorliegenden Ausführungsform liegt darin, dass die Koppelglieder 10 als Zylinderstifte ausgeführt sind, wobei die Koppelglieder 10 mit dem Schaltelement 12 fest verbunden sind. Als Zylinderstift ist ein Stift von in im Wesentlichen zylindrischer Form zu verstehen, der gegebenenfalls in Längsrichtung oder Umfangsrichtung Nuten oder ähnliche Ausnehmungen aufweisen kann.

In den Figuren 13 und 14 ist die Schaltkupplung 4 in geschlossenem Zustand dargestellt. In geschlossenem Zustand der Schaltkupplung 4 lässt das Schaltelement 12 in seiner ersten Position die zylindrischen Koppelglieder 10 aus den axialen Öffnungen 11 hervortreten, sodass die Koppelglieder 10 in die Ausnehmungen 21 des zweiten Kupplungsteils 26 eingreifen. In den Figuren 10 bis 12 ist die Schaltkupplung 4 in geöffnetem Zustand dargestellt. In geöffnetem Zustand der Schaltkupplung 4 lässt das Schaltelement 12 in seiner zweiten Position die zapfenförmigen Koppelglieder 10 aus den Ausnehmungen 21 in die Öffnungen 11 zurücktreten. Das Schaltelement 12 ist koaxial zu dem zweiten Kupplungsteil 26 gehalten und in axialer Richtung zwischen der ersten Position und der zweiten Position verschiebbar.

In der Figur 12 ist ein Schnitt entlang der Linie C-C gemäß Figur 10 dargestellt. Darin ist im Detail das Schaltelement 12 in der zweiten Position, also in getrenntem Zustand der Schaltkupplung 4, dargestellt. Eines der Koppelglieder 10 ist aus einer der Ausnehmungen 21 in eine der Öffnungen 11 zurückgetreten erkennbar. In der Figur 15 ist das Detail noch einmal vergrößert dargestellt. In der Figur 16 ist ein Schnitt entlang der Linie D-D gemäß Figur 10 dargestellt. Ein Durchmesser des zylindrischen Koppelglieds 10 passt in die von Wandungen 34 begrenzte Ausnehmung 21, die in Umfangsrichtung als Langloch ausgeführt ist um ein Verstellen des Koppelglieds 10 in die zweite Position zu erleichtern. Die Koppelglieder 10 weisen eine Spielpassung zu der Ausnehmung 21 im zweiten Kupplungsteil 26 auf. Das Spiel beträgt beispielsweise zwischen 0,02 und 0,06 Millimeter in radialer Richtung. In Umfangsrichtung ist das Spiel wegen des Langlochs der Ausnehmung 21 um 0,6 bis 0,8 Millimeter größer als in radialer Richtung. In dem dargestellten Ausführungsbeispiel ist die Ausnehmung 21 nicht als vollständige Bohrung in einem vollen Material des zweiten Kupplungsteils 26 ausgeführt, sondern an einem ringförmigen Stutzen des Differentialträgers 13, dessen radiale Erstreckung kleiner ist, als der Bohrungsdurchmesser. Ein Spiel zwischen den Koppelgliedern 10 und dem ersten Kupplungsteil 25 kompensiert Lagetoleranzen der Kupplungsgeometrie am Differentialträger 13 und eine Verformungen des Differentialträgers 13 und der Koppelglieder 10 unter Last. Es kann beispielsweise zwischen 0,08 und 0,3 Millimeter betragen.

In der Figur 17 ist das Detail gemäß einer alternativen Ausführungsform dargestellt. Das zylindrische Koppelglied 10 weist einen dem zweiten Kupplungsteil 26 zugewandten Kopfbereich 33 auf, welcher in geschlossenem Zustand der Schaltkupplung 4 in die Ausnehmung 21 eingreift. Diese Kopfbereich 33 weist eine konische Form auf, wobei der Kopfbereich 33 sich in axialer Richtung von dem zweiten Kupplungsteil 26 zu dem ersten Kupplungsteil 25 hin verjüngt. Die Ausnehmung 21 weist eine zu dem Koppelglied 10 etwa gegengleiche Form auf. Die Ausnehmung 21 weitet sich in axialer Richtung von dem ersten Kupplungsteil 25 hin zu dem zweiten Kupplungsteil 26 auf. Durch diese Formgebung wird das Koppelglied 10 auch bei sehr geringen einwirkenden Drehmomenten durch Reibung zwischen dem Kopfbereich 33 des Koppelglieds 10 und der Wandung 34 der Ausnehmung 21 in der Ausnehmung 21 gehalten.

In der Figur 19 ist das Schaltelement 12 bzw. das Geberelement 38 ohne Koppelglieder dargestellt. In den Figuren 18 und 20 ist das Schaltelement 12 der Ausführungsform gemäß Figur 10 als Detail perspektivisch dargestellt. Die zylindrischen Koppelglieder 10 sind in axialer Richtung formschlüssig mit dem Schaltelement 12 verbunden, beispielsweise indem eine Umfangsnut 31 an den Koppelgliedern 10 in entsprechende schlüssellochförmige Öffnung 32 an dem ringscheibenförmigen Schaltelement 12 eingesetzt ist. Ein Spiel zwischen den Koppelgliedern 10 und dem Schaltelement 12 kann beispielsweise 0,2 Millimeter betragen, da grundsätzlich keine Kraftübertragung zwischen den Koppelgliedern 10 und dem Schaltelement 12 erfolgt. Alternativ können die Koppelglieder 10 in geeigneter anderer Weise an dem ringscheibenförmigen Schaltelement 12 befestigt sein, beispielsweise durch eine Schraubverbindung, durch Kleben oder durch Punktschweißen. Das Schaltelement 12 kann bei der Ausführungsform als Geberelement 29 für den Sensor 44 zur Ermittlung der Schaltstellungen der Schaltkupplung dienen. Da grundsätzlich keine Kraftübertragung zwischen den Koppelgliedern 10 und dem Schaltelement 12 erfolgt, kann das Schaltelement 12 eine geringe Torsionssteifigkeit aufweisen, die beispielsweise weniger als 20 Prozent der Torsionssteifigkeit des ersten Kupplungsteils 25 und des zweiten Kupplungsteils 26 beträgt, insbesondere weniger als zehn Prozent.

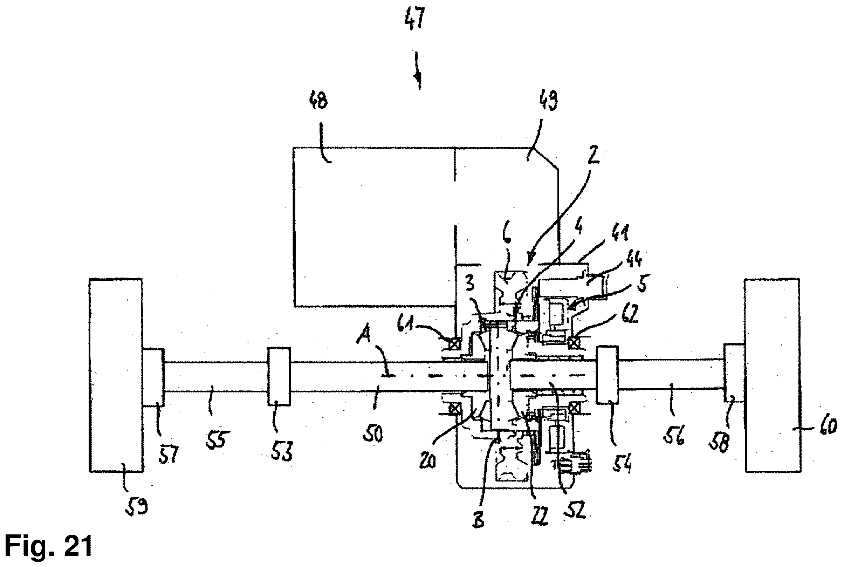

Die Figur 21 zeigt eine Antriebsanordnung 47 mit der Differentialanordnung 2 in schematischer Darstellung. Die Antriebsanordnung 47 umfasst einen Antriebsmotor 48, der über eine Getriebestufe 49 die Differentialanordnung 2, bzw. das Antriebsrad 6 der Differentialanordnung 2, antreibt. Von dem Differentialgetriebe 3 wird das bei geschlossener Schaltkupplung 4 eingeleitete Drehmoment auf die beiden Seitenwellenräder 20, 22 übertragen. In den Längsverzahnungen 23 der Seitenwellenräder 20, 22 sind entsprechende Seitenwellen 50, 52 zur Drehmomentübertragung drehfest eingesteckt. An den Enden der Seitenwellen 50, 52 befinden sich Gleichlaufdrehgelenke 53, 54, welche wiederum über Gelenkwellen 55, 56 und Gelenke 57, 58 mit Rädern 59, 60 des Kraftfahrzeugs zur Übertragung eines Drehmoments verbunden sind. Es ist erkennbar, dass die Differentialanordnung 2 mittels Lagern 61, 62 gegenüber dem stehenden Gehäuse 41 um die Drehachse A drehbar gelagert ist.

### Bezugszeichenliste

- 2: Differentialanordnung
- 3: Differentialgetriebe
- 4: Schaltkupplung
- 5: Aktuator
- 6: Antriebsrad
- 7: Differentialgehäuse
- 8: erstes Gehäuseteil
- 9: zweites Gehäuseteil
- 10: Koppelglieder
- 11: Öffnung
- 12: Schaltelement
- 13: Differentialträger
- 14: Außenfläche
- 15: Flächenabschnitt
- 17: Zapfen
- 19: Differentialräder
- 20: Seitenwellenrad
- 21: Ausnehmung
- 22: Seitenwellenrad
- 23: Längsverzahnung
- 25: erstes Kupplungsteil
- 26: zweites Kupplungsteil
- 27: Ansatz
- 28: Durchbrüche
- 29: Zapfen
- 30: Ringabschnitt
- 31: Umfangsnut
- 32: Schlüssellochförmige Öffnung
- 33: Kopfbereich
- 34: Wandung
- 35: Führungshülsen
- 38: Geberelement
- 43: Rückstellfeder
- 44: Sensor
- 45: Schaltkontur
- 47: Antriebsanordnung
- 48: Motor
- 49: Getriebe
- 50, 52: Welle
- 53, 54: Gelenk
- 55, 56: Gelenkwelle
- 59, 60: Rad
- 61, 62: Lager
- A: Drehachse
- B: Zapfenachse

## Patentansprüche

1. Differentialanordnung, insbesondere für eine Antriebsachse eines Kraftfahrzeugs, umfassend ein Antriebsrad (6); ein um eine Drehachse (A) drehbar gelagertes Differentialgetriebe (3) mit einem Eingangsteil (13); eine zwischen dem Antriebsrad (6) und dem Differentialgetriebe (3) wirksam angeordnete Schaltkupplung (4), wobei in geschlossenem Zustand der Schaltkupplung (4) ein Drehmoment von dem Antriebsrad (6) auf das Differentialgetriebe (3) übertragen wird und in geöffnetem Zustand der Schaltkupplung (4) eine Drehmomentübertragung unterbrochen ist,
wobei ein erstes Kupplungsteil (25) der Schaltkupplung (4) mit einem Differentialgehäuse (7) des Differentialgetriebes (3) und ein zweites Kupplungsteil (26) der Schaltkupplung (4) mit dem Eingangsteil (13) fest verbunden ist,
wobei die Schaltkupplung (4) relativ zu dem ersten Kupplungsteil (25) und zu dem zweiten Kupplungsteil (26) verschiebbare Koppelglieder (10) und zumindest ein auf die Koppelglieder (10) wirkendes Schaltelement (12) aufweist, wobei das Schaltelement (12) die Koppelglieder (10) zwischen einer ersten Position für den geschlossenem Zustand der Schaltkupplung (4), in dem die Koppelglieder (10) drehmomentübertragend zwischen dem ersten Kupplungsteil (25) und dem zweiten Kupplungsteil (26) angeordnet sind, und einer zweiten Position für den geöffnetem Zustand der Schaltkupplung (4), in dem das erste Kupplungsteil (25) von dem zweiten Kupplungsteil (26) getrennt ist, verschiebt, wobei mindestens sechs Koppelglieder (10) vorgesehen sind, wobei die Koppelglieder (10) in Öffnungen (11) des ersten Kupplungsteils (25) oder des zweiten Kupplungsteils (26) geführt sind, wobei in geschlossenem Zustand der Schaltkupplung (4) das Schaltelement (12) in der ersten Position die Koppelglieder (10) aus den Öffnungen hervortreten lässt, sodass die Koppelglieder in Ausnehmungen (21) des jeweils anderen des ersten Kupplungsteils (25) und des zweiten Kupplungsteils (26) eingreifen, und wobei in geöffnetem Zustand der Schaltkupplung (4) das Schaltelement (12) in der zweiten Position die Koppelglieder (10) aus den Ausnehmungen (21) in die Öffnungen (11) zurücktreten lässt,
wobei die Koppelglieder (10) axial verschiebbar in axialen Öffnungen (11) des ersten Kupplungsteils (25) geführt sind,
wobei die Koppelglieder (10) als Zylinderstifte ausgeführt sind, wobei die Koppelglieder (10) mit dem Schaltelement (12) fest verbunden sind und
wobei die Ausnehmungen (21) des zweiten Kupplungsteils (26) als Langloch in Umfangsrichtung ausgeführt sind.

2. Differentialanordnung nach einem der Ansprüche 1 oder 2, **dadurch gekennzeichnet, dass** die axialen Öffnungen (11) des ersten Kupplungsteils (25) als axial durchgehende Bohrungen des Differentialgehäuses (7) gestaltet sind.

3. Differentialanordnung nach einem der Ansprüche 1 bis 3, **dadurch gekennzeichnet, dass** die Koppelglieder (10) einen dem zweiten Kupplungsteil (26) zugewandten konischen Kopfbereich (33) aufweisen, wobei der Kopfbereich (33) sich in axialer Richtung von dem zweiten Kupplungsteil (26) zu dem ersten Kupplungsteil (25) hin verjüngt.

4. Differentialanordnung nach einem der Ansprüche 1 bis 4, **dadurch gekennzeichnet, dass** die Ausnehmungen (21) des zweiten Kupplungsteils (26) sich in axialer Richtung von einer dem ersten Kupplungsteil (25) zugewandten Oberfläche in das zweiten Kupplungsteil (26) hinein aufweiten.

5. Differentialanordnung nach einem der Ansprüche 1 bis 5, **dadurch gekennzeichnet, dass** die Koppelglieder (10) in axialer Richtung formschlüssig mit dem Schaltelement (12) verbunden sind.

6. Differentialanordnung, insbesondere für eine Antriebsachse eines Kraftfahrzeugs, umfassend ein Antriebsrad (6); ein um eine Drehachse (A) drehbar gelagertes Differentialgetriebe (3) mit einem Eingangsteil (13); eine zwischen dem Antriebsrad (6) und dem Differentialgetriebe (3) wirksam angeordnete Schaltkupplung (4), wobei in geschlossenem Zustand der Schaltkupplung (4) ein Drehmoment von dem Antriebsrad (6) auf das Differentialgetriebe (3) übertragen wird und in geöffnetem Zustand der Schaltkupplung (4) eine Drehmomentübertragung unterbrochen ist,
wobei ein erstes Kupplungsteil (25) der Schaltkupplung (4) mit einem Differentialgehäuse (7) des Differentialgetriebes (3) und ein zweites Kupplungsteil (26) der Schaltkupplung (4) mit dem Eingangsteil (13) fest verbunden ist,
wobei die Schaltkupplung (4) relativ zu dem ersten Kupplungsteil (25) und zu dem zweiten Kupplungsteil (26) verschiebbare Koppelglieder (10) und zumindest ein auf die Koppelglieder (10) wirkendes Schaltelement (12) aufweist, wobei das Schaltelement (12) die Koppelglieder (10) zwischen einer ersten Position für den geschlossenem Zustand der Schaltkupplung (4), in dem die Koppelglieder (10) drehmomentübertragend zwischen dem ersten Kupplungsteil (25) und dem zweiten Kupplungsteil (26) angeordnet sind, und einer zweiten Position für den geöffnetem Zustand der Schaltkupplung (4), in dem das erste Kupplungsteil (25) von dem zweiten Kupplungsteil (26) getrennt ist, verschiebt, wobei mindestens sechs Koppelglieder (10) vorgesehen sind, wobei die Koppelglieder (10) in Öffnungen (11) des ersten Kupplungsteils (25) oder des zweiten Kupplungsteils (26) geführt sind, wobei in geschlossenem Zustand der Schaltkupplung (4) das Schaltelement (12) in der ersten Position die Koppelglieder (10) aus den Öffnungen hervortreten lässt, sodass die Koppelglieder in Ausnehmungen (21) des jeweils anderen des ersten Kupplungsteils (25) und des zweiten Kupplungsteils (26) eingreifen, und wobei in geöffnetem Zustand der Schaltkupplung (4) das Schaltelement (12) in der zweiten Position die Koppelglieder (10) aus den Ausnehmungen (21) in die Öffnungen (11) zurücktreten lässt,
wobei die Koppelglieder (10) axial verschiebbar in axialen Öffnungen (11) des ersten Kupplungsteils (25) geführt sind,
wobei das zumindest eine Schaltelement (12) in die axialen Öffnungen (11) eingreifende Zapfen (29) aufweist, wobei die Koppelglieder (10) als Kugeln ausgeführt sind und in geschlossenem Zustand der Schaltkupplung (4) von den Zapfen (29) in den Ausnehmungen (21) des zweiten Kupplungsteils (26) gehalten werden.

7. Differentialanordnung nach Anspruch 7, **dadurch gekennzeichnet, dass** in den axialen Öffnungen (11) Führungshülsen (35) zur Führung der Koppelglieder (10) angeordnet sind.

8. Differentialanordnung nach einem der Ansprüche 7 oder 8, **dadurch gekennzeichnet, dass** die axialen Öffnungen (11) des ersten Kupplungsteils (25) als axial durchgehende Bohrungen des Differentialgehäuses (7) gestaltet sind.

9. Differentialanordnung, insbesondere für eine Antriebsachse eines Kraftfahrzeugs, umfassend ein Antriebsrad (6); ein um eine Drehachse (A) drehbar gelagertes Differentialgetriebe (3) mit einem Eingangsteil (13); eine zwischen dem Antriebsrad (6) und dem Differentialgetriebe (3) wirksam angeordnete Schaltkupplung (4), wobei in geschlossenem Zustand der Schaltkupplung (4) ein Drehmoment von dem Antriebsrad (6) auf das Differentialgetriebe (3) übertragen wird und in geöffnetem Zustand der Schaltkupplung (4) eine Drehmomentübertragung unterbrochen ist,
wobei ein erstes Kupplungsteil (25) der Schaltkupplung (4) mit einem Differentialgehäuse (7) des Differentialgetriebes (3) und ein zweites Kupplungsteil (26) der Schaltkupplung (4) mit dem Eingangsteil (13) fest verbunden ist,
wobei die Schaltkupplung (4) relativ zu dem ersten Kupplungsteil (25) und zu dem zweiten Kupplungsteil (26) verschiebbare Koppelglieder (10) und zumindest ein auf die Koppelglieder (10) wirkendes Schaltelement (12) aufweist, wobei das Schaltelement (12) die Koppelglieder (10) zwischen einer ersten Position für den geschlossenem Zustand der Schaltkupplung (4), in dem die Koppelglieder (10) drehmomentübertragend zwischen dem ersten Kupplungsteil (25) und dem zweiten Kupplungsteil (26) angeordnet sind, und einer zweiten Position für den geöffnetem Zustand der Schaltkupplung (4), in dem das erste Kupplungsteil (25) von dem zweiten Kupplungsteil (26) getrennt ist, verschiebt, wobei mindestens sechs Koppelglieder (10) vorgesehen sind, wobei die Koppelglieder (10) in Öffnungen (11) des ersten Kupplungsteils (25) oder des zweiten Kupplungsteils (26) geführt sind, wobei in geschlossenem Zustand der Schaltkupplung (4) das Schaltelement (12) in der ersten Position die Koppelglieder (10) aus den Öffnungen hervortreten lässt, sodass die Koppelglieder in Ausnehmungen (21) des jeweils anderen des ersten Kupplungsteils (25) und des zweiten Kupplungsteils (26) eingreifen, und wobei in geöffnetem Zustand der Schaltkupplung (4) das Schaltelement (12) in der zweiten Position die Koppelglieder (10) aus den Ausnehmungen (21) in die Öffnungen (11) zurücktreten lässt,
wobei die Koppelglieder (10) axial verschiebbar in axialen Öffnungen (11) des ersten Kupplungsteils (25) geführt sind,
wobei die Koppelglieder (10) radial verschiebbar in radialen Öffnungen (11) des zweiten Kupplungsteils (26) geführt sind, wobei die radialen Öffnungen (11) als radial durchgehende Bohrungen des Eingangsteils (13) gestaltet sind, wobei das zumindest eine Schaltelement (12) eine auf die Koppelglieder (10) wirkenden Schaltkontur (45) aufweist und wobei in geschlossenem Zustand der Schaltkupplung (4) die Koppelglieder in radialer Richtung von dem zumindest einen Schaltelement (12) verriegelt sind.

10. Differentialanordnung nach Anspruch 10, **dadurch gekennzeichnet, dass** das zumindest eine Schaltelement (12) mindestens einen sich axial durch mindestens einen Durchbruch (28) des Differentialgehäuses (7) hindurch erstreckenden Ansatz (27) aufweist, wobei das Schaltelement (12) über den mindestens einen Ansatz (27) von einem Aktuator (5) betätigt wird und wobei der mindestens eine Ansatz (27) mit einem Geberelement (38) für einen Sensor (44) zur Ermittlung von Schaltstellungen der Schaltkupplung (4) verbunden ist.

11. Differentialanordnung nach einem der vorhergehenden Ansprüche, **dadurch gekennzeichnet, dass** ein Durchmesser der Koppelglieder (10) zwischen fünf und fünfzehn Millimeter beträgt.

12. Differentialanordnung nach einem der Ansprüche 1 bis 8, **dadurch gekennzeichnet, dass** das Schaltelement (12) als Geberelement für einen Sensor (44) zur Ermittlung von Schaltstellungen der Schaltkupplung (4) dient.

## Claims

1. Differential arrangement, in particular for a drive axle of a motor vehicle, comprising a drive wheel (6); a differential gear (3) with an input part (13); a shift clutch (4) operatively arranged between the drive wheel (6) and the differential gear (3), wherein in a closed state of the shift clutch (4) a torque is transmitted from the drive wheel (6) to the differential gear (3), and in an open state of the shift clutch (4) a torque transmission is disconnected,
wherein a first clutch part (25) of the shift clutch (4) is fixedly connected to a differential housing (7) of the differential gear (3) and a second clutch part (26) of the shift clutch (4) is fixedly connected to the input part (13),
wherein the shift clutch (4) comprises coupling members (10) displaceably arranged relative to the first clutch part (25) and to the second clutch part (26), and at least one switching element (12) which acts on the coupling members (10),
wherein the switching element (12) displaces the coupling members (10) between a first position for the closed state of the shift clutch (4) in which the coupling members (10) are arranged in a torque-transmitting manner between the first clutch part (25) and the second clutch part (26), and a second position for the open state of the shift clutch (4), in which the first clutch part (25) is separated from the second clutch part (26), wherein at least six coupling members (10) are provided,
wherein the coupling members (10) are guided in openings (11) of the first clutch part (25) or of the second clutch part (26), wherein, in the closed state of the shift clutch (4), the switching element (12), in the first position, actuates the coupling members (10) to emerge from the openings so that the coupling members engage in recesses (21) of the respective other one of the first clutch part (25) and the second clutch part (26), and wherein, in the open state of the shift clutch (4), the switching element (12), in the second position, actuates the coupling members (10) to recoil from the recesses into the openings (11), wherein the coupling members (10) are guided axially displaceable in axial openings (11) of the first clutch part (25),
wherein the coupling members (10) are formed as cylindrical pins, the coupling members (10) being fixedly connected to the switching element (12),
wherein the recesses (21) of the second clutch part (26) are formed as elongated holes extending in circumferential direction.

2. Differential arrangement according to one of claims 1 or 2, **characterized in that** the axial openings (11) of the first clutch part (25) are formed as continuous axial bores of the differential housing (7).

3. Differential arrangement according to one of claims 1 to 3, **characterized in that** said coupling members (10) comprise a conical head portion (33) facing said second clutch part (26), said head portion (33) tapering in axial direction from said second clutch part (26) towards said first clutch part (25).

4. Differential arrangement according to one of claims 1 to 4, **characterized in that** the recesses (21) of the second clutch part (26) widen in axial direction from a surface facing the first clutch part (25) into the second clutch part (26).

5. Differential arrangement according to any one of claims 1 to 5, **characterized in that** the coupling members (10) are positively connected to the switching element (12) in the axial direction.

6. Differential arrangement, in particular for a drive axle of a motor vehicle, comprising a drive wheel (6); a differential gear (3) with an input part (13); a shift clutch (4) operatively arranged between the drive wheel (6) and the differential gear (3), wherein in a closed state of the shift clutch (4) a torque is transmitted from the drive wheel (6) to the differential gear (3), and in an open state of the shift clutch (4) a torque transmission is disconnected,
wherein a first clutch part (25) of the shift clutch (4) is fixedly connected to a differential housing (7) of the differential gear (3) and a second clutch part (26) of the shift clutch (4) is fixedly connected to the input part (13),
**characterized in that** the shift clutch (4) comprises coupling members (10) displaceably arranged relative to the first clutch part (25) and to the second clutch part (26), and at least one switching element (12) which acts on the coupling members (10),
wherein the switching element (12) displaces the coupling members (10) between a first position for the closed state of the shift clutch (4) in which the coupling members (10) are arranged in a torque-transmitting manner between the first clutch part (25) and the second clutch part (26), and a second position for the open state of the shift clutch (4), in which the first clutch part (25) is separated from the second clutch part (26), wherein at least six coupling members (10) are provided,
wherein the coupling members (10) are guided in openings (11) of the first clutch part (25) or of the second clutch part (26), wherein, in the closed state of the shift clutch (4), the switching element (12), in the first position, actuates the coupling members (10) to emerge from the openings so that the coupling members engage in recesses (21) of the respective other one of the first clutch part (25) and the second clutch part (26), and wherein, in the open state of the shift clutch (4), the switching element (12), in the second position, actuates the coupling members (10) to recoil from the recesses into the openings (11),
wherein the coupling members (10) are guided axially displaceable in axial openings (11) of the first clutch part (25),
wherein the at least one switching element (12) has pins (29) protruding into the axial openings (11), wherein the coupling members (10) formed as balls are held, in the closed state of the shift coupling (4), in the recesses (21) of the second clutch part (26) by the pins (29).

7. Differential arrangement according to claim 7, **characterized in that** guide sleeves (35) for guiding the coupling members (10) are arranged in the axial openings (11).

8. Differential arrangement according to one of claims 7 or 8, **characterized in that** the axial openings (11) of the first clutch part (25) are formed as continuous axial bores of the differential housing (7).

9. Differential arrangement, in particular for a drive axle of a motor vehicle, comprising a drive wheel (6); a differential gear (3) with an input part (13); a shift clutch (4) operatively arranged between the drive wheel (6) and the differential gear (3), wherein in a closed state of the shift clutch (4) a torque is transmitted from the drive wheel (6) to the differential gear (3), and in an open state of the shift clutch (4) a torque transmission is disconnected,
wherein a first clutch part (25) of the shift clutch (4) is fixedly connected to a differential housing (7) of the differential gear (3) and a second clutch part (26) of the shift clutch (4) is fixedly connected to the input part (13),
**characterized in that** the shift clutch (4) comprises coupling members (10) displaceably arranged relative to the first clutch part (25) and to the second clutch part (26), and at least one switching element (12) which acts on the coupling members (10),
wherein the switching element (12) displaces the coupling members (10) between a first position for the closed state of the shift clutch (4) in which the coupling members (10) are arranged in a torque-transmitting manner between the first clutch part (25) and the second clutch part (26), and a second position for the open state of the shift clutch (4), in which the first clutch part (25) is separated from the second clutch part (26), wherein at least six coupling members (10) are provided,
wherein the coupling members (10) are guided in openings (11) of the first clutch part (25) or of the second clutch part (26), wherein, in the closed state of the shift clutch (4), the switching element (12), in the first position, actuates the coupling members (10) to emerge from the openings so that the coupling members engage in recesses (21) of the respective other one of the first clutch part (25) and the second clutch part (26), and wherein, in the open state of the shift clutch (4), the switching element (12), in the second position, actuates the coupling members (10) to recoil from the recesses into the openings (11),
wherein the coupling members (10) are guided axially displaceable in axial openings (11) of the first clutch part (25),
wherein the coupling members (10) are guided radially displaceable in radial openings (11) of the second clutch part (26), the radial openings (11) being formed as continuous radial bores of the input part (13), wherein the at least one switching element (12) has a switching contour (45) acting on the coupling members (10), and wherein, in the closed state of the shift clutch (4), the coupling members are locked in radial direction by the at least one switching element (12).

10. Differential arrangement according to claim 10, **characterized in that** the at least one switching element (12) has at least one projection (27) extending axially through at least one aperture (28) of the differential housing (7), the switching element (12) being actuated by a actuator (5) via the at least one projection (27), and the at least one projection (27) being connected to an indicator element (38) for a sensor (44) for determining switching positions of the shift clutch (4).

11. Differential arrangement according to one of the preceding claims, **characterized in that** the coupling members (10) have a diameter between five and fifteen millimeter.

12. Differential arrangement according to any one of claims 1 to 8, **characterized in that** the switching element (12) serves as an indicator element for a sensor (44) for determining shift positions of the shift clutch (4).

## Revendications

1. Dispositif différentiel, en particulier pour un essieu moteur d'un véhicule automobile, comprenant une roue motrice (6); un différentiel (3) avec une partie d'entrée (13) ; un embrayage de changement de vitesse (4) disposé de manière opérationnelle entre la roue motrice (6) et le différentiel (3), dans lequel, lorsque l'embrayage de changement de vitesse (4) est fermé, un couple est transmis de la roue motrice (6) au différentiel (3), et dans lequel, à l'état ouvert de l'embrayage de changement de vitesse (4), la transmission du couple est coupée, une première partie d'embrayage (25) de l'embrayage de changement de vitesse (4) étant reliée de manière fixe à un carter de différentiel (7) du différentiel (3) et une deuxième partie d'embrayage (26) de l'embrayage de changement de vitesse (4) étant reliée de manière fixe à la partie d'entrée (13), l'embrayage de changement de vitesse (4) comprenant des éléments d'accouplement (10) disposés de manière déplaçable par rapport à la première partie d'embrayage (25) et à la deuxième partie d'embrayage (26), et au moins un élément de commutation (12) qui agit sur les éléments d'accouplement (10), l'élément de commutation (12) déplaçant les éléments d'accouplement (10) entre une première position pour l'état fermé de l'embrayage de changement de vitesse (4), dans laquelle les éléments d'accouplement (10) sont disposés de manière à transmettre le couple entre la première partie d'embrayage (25) et la deuxième partie d'embrayage (26), et une deuxième position pour l'état ouvert de l'embrayage de changement de vitesse (4), dans laquelle la première partie d'embrayage (25) est séparée de la deuxième partie d'embrayage (26), dans lequel au moins six éléments d'accouplement (10) sont prévus, dans lequel les éléments d'accouplement (10) sont guidés dans des ouvertures (11) de la première partie d'embrayage (25) ou de la deuxième partie d'embrayage (26), dans lequel, dans l'état fermé de l'embrayage de changement de vitesse (4), l'élément de commutation (12), dans la première position, actionne les éléments d'accouplement (10) pour qu'ils sortent des ouvertures de manière à ce que les éléments d'accouplement s'engagent dans des évidements (21) de l'autre partie respective parmi la première partie d'embrayage (25) et la deuxième partie d'embrayage (26), et dans lequel, dans l'état ouvert de l'embrayage de changement de vitesse (4), l'élément de commutation (12), dans la deuxième position, actionne les éléments d'accouplement (10) pour qu'ils se rétractent des évidements dans les ouvertures (11), les éléments d'accouplement (10) étant guidés de manière à pouvoir se déplacer axialement dans des ouvertures axiales (11) de la première partie d'embrayage (25), les éléments d'accouplement (10) étant réalisés sous forme de goupilles cylindriques, les éléments d'accouplement (10) étant reliés de manière fixe à l'élément de commutation (12), les évidements (21) de la deuxième partie d'embrayage (26) étant réalisés sous forme de trous oblongs s'étendant dans la direction circonférentielle.

2. Dispositif différentiel selon l'une des revendications 1 ou 2, **caractérisé en ce que** les ouvertures axiales (11) de la première partie d'embrayage (25) sont conçues comme des alésages axiaux traversants du boîtier différentiel (7).

3. Dispositif différentiel selon l'une des revendications 1 à 3, **caractérisé en ce que** les éléments de couplage (10) présentent une zone de tête conique (33) tournée vers la deuxième partie d'embrayage (26), la zone de tête (33) se rétrécissant dans la direction axiale depuis la deuxième partie d'embrayage (26) vers la première partie d'embrayage (25).

4. Dispositif différentiel selon l'une des revendications 1 à 4, **caractérisé en ce que** les évidements (21) de la deuxième partie d'embrayage (26) s'élargissent dans la direction axiale à partir d'une surface tournée vers la première partie d'embrayage (25) vers l'intérieur de la deuxième partie d'embrayage (26).

5. Dispositif différentiel selon l'une des revendications 1 à 5, **caractérisé en ce que** les éléments de couplage (10) sont reliés par complémentarité de forme dans la direction axiale à l'élément de commutation (12).

6. Dispositif différentiel, en particulier pour un essieu moteur d'un véhicule automobile, comprenant une roue motrice (6) ; un différentiel (3) avec une partie d'entrée (13) ; un embrayage de changement de vitesse (4) disposé de manière opérationnelle entre la roue motrice (6) et le différentiel (3), dans lequel, lorsque l'embrayage de changement de vitesse (4) est fermé, un couple est transmis de la roue motrice (6) au différentiel (3), et dans lequel, à l'état ouvert de l'embrayage de changement de vitesse (4), la transmission du couple est coupée, une première partie d'embrayage (25) de l'embrayage de changement de vitesse (4) étant reliée de manière fixe à un carter de différentiel (7) du différentiel (3) et une deuxième partie d'embrayage (26) de l'embrayage de changement de vitesse (4) étant reliée de manière fixe à la partie d'entrée (13), **caractérisé en ce que** l'embrayage de changement de vitesse (4) comprend des éléments d'accouplement (10) disposés de manière déplaçable par rapport à la première partie d'embrayage (25) et à la deuxième partie d'embrayage (26), et au moins un élément de commutation (12) qui agit sur les éléments d'accouplement (10), l'élément de commutation (12) déplaçant les éléments d'accouplement (10) entre une première position pour l'état fermé de l'embrayage de changement de vitesse (4), dans laquelle les éléments d'accouplement (10) sont disposés de manière à transmettre le couple entre la première partie d'embrayage (25) et la deuxième partie d'embrayage (26), et une deuxième position pour l'état ouvert de l'embrayage de changement de vitesse (4), dans laquelle la première partie d'embrayage (25) est séparée de la deuxième partie d'embrayage (26), dans lequel au moins six éléments d'accouplement (10) sont prévus, dans lequel les éléments d'accouplement (10) sont guidés dans des ouvertures (11) de la première partie d'embrayage (25) ou de la deuxième partie d'embrayage (26), dans lequel, à l'état fermé de l'embrayage de changement de vitesse (4), l'élément de commutation (12), dans la première position, actionne les éléments d'accouplement (10) pour qu'ils sortent des ouvertures de manière à ce que les éléments d'accouplement s'engagent dans des évidements (21) de l'autre élément parmi la première partie d'embrayage (25) et la deuxième partie d'embrayage (26), et dans lequel, à l'état ouvert de l'embrayage de changement de vitesse (4), l'élément de commutation (12), dans la deuxième position, actionne les éléments d'accouplement (10) pour qu'ils se rétractent des évidements dans les ouvertures (11), dans lequel les éléments d'accouplement (10) sont guidés de manière à pouvoir se déplacer axialement dans des ouvertures axiales (11) de la première partie d'embrayage (25), dans lequel le au moins un élément de commutation (12) comporte des broches (29) faisant saillie dans les ouvertures axiales (11), dans lequel les éléments d'accouplement (10) formés comme des billes sont maintenus, à l'état fermé de l'embrayage de changement de vitesse (4), dans les évidements (21) de la deuxième partie d'embrayage (26) par les broches (29).

7. Dispositif différentiel selon la revendication 7, **caractérisé en ce que** des douilles de guidage (35) destinées à guider les éléments de couplage (10) sont disposées dans les ouvertures axiales (11).

8. Dispositif différentiel selon l'une des revendications 7 ou 8, **caractérisé en ce que** les ouvertures axiales (11) de la première partie d'embrayage (25) sont conçues comme des alésages axiaux traversants du carter de différentiel (7).

9. Dispositif différentiel, en particulier pour un essieu moteur d'un véhicule automobile, comprenant une roue motrice (6) ; un différentiel (3) avec une partie d'entrée (13) ; un embrayage de changement de vitesse (4) disposé de manière opérationnelle entre la roue motrice (6) et le différentiel (3), dans lequel, lorsque l'embrayage de changement de vitesse (4) est fermé, un couple est transmis de la roue motrice (6) au différentiel (3), et dans lequel, à l'état ouvert de l'embrayage de changement de vitesse (4), la transmission du couple est coupée, une première partie d'embrayage (25) de l'embrayage de changement de vitesse (4) étant reliée de manière fixe à un carter de différentiel (7) du différentiel (3) et une deuxième partie d'embrayage (26) de l'embrayage de changement de vitesse (4) étant reliée de manière fixe à la partie d'entrée (13), **caractérisé en ce que** l'embrayage de changement de vitesse (4) comprend des éléments d'accouplement (10) disposés de manière déplaçable par rapport à la première partie d'embrayage (25) et à la deuxième partie d'embrayage (26), et au moins un élément de commutation (12) qui agit sur les éléments d'accouplement (10), dans lequel l'élément de commutation (12) déplace les éléments d'accouplement (10) entre une première position pour l'état fermé de l'embrayage de changement de vitesse (4), dans laquelle les éléments d'accouplement (10) sont disposés de manière à transmettre le couple entre la première partie d'embrayage (25) et la deuxième partie d'embrayage (26), et une deuxième position pour l'état ouvert de l'embrayage de changement de vitesse (4), dans laquelle la première partie d'embrayage (25) est séparée de la deuxième partie d'embrayage (26), dans lequel au moins six éléments de couplage (10) sont prévus, dans lequel les éléments de couplage (10) sont guidés dans des ouvertures (11) de la première partie d'embrayage (25) ou de la deuxième partie d'embrayage (26), dans lequel, dans l'état fermé de l'embrayage de changement de vitesse (4), l'élément de commutation (12), dans la première position, actionne les éléments d'accouplement (10) pour qu'ils sortent des ouvertures de manière à ce que les éléments d'accouplement s'engagent dans des évidements (21) de l'autre partie respective parmi la première partie d'embrayage (25) et la deuxième partie d'embrayage (26), et dans lequel, à l'état ouvert de l'embrayage de changement de vitesse (4), l'élément de commutation (12), dans la deuxième position, actionne les éléments d'accouplement (10) pour qu'ils se rétractent des évidements dans les ouvertures (11), les éléments d'accouplement (10) étant guidés de manière à pouvoir se déplacer axialement dans des ouvertures axiales (11) de la première partie d'embrayage (25), les éléments d'accouplement (10) étant guidés de manière à pouvoir se déplacer radialement dans des ouvertures radiales (11) de la deuxième partie d'embrayage (26), les ouvertures radiales (11) étant formées comme des alésages radiaux continus de la partie d'entrée (13), dans lequel le au moins un élément de commutation (12) présente un contour de commutation (45) agissant sur les éléments d'accouplement (10), et dans lequel, à l'état fermé de l'embrayage de changement de vitesse (4), les éléments d'accouplement sont bloqués dans la direction radiale par le au moins un élément de commutation (12).

10. Dispositif différentiel selon la revendication 10, **caractérisé en ce que** le au moins un élément de commutation (12) comporte au moins une saillie (27) s'étendant axialement à travers au moins une ouverture (28) du boîtier différentiel (7), l'élément de commutation (12) étant actionné par un actionneur (5) via la au moins une saillie (27), et la au moins une saillie (27) étant reliée à un élément indicateur (38) pour un capteur (44) destiné à déterminer les positions de commutation de l'embrayage de changement de vitesse (4).

11. Dispositif différentiel selon l'une des revendications précédentes, **caractérisé en ce que** le diamètre des éléments de couplage (10) est compris entre cinq et quinze millimètres.

12. Dispositif différentiel selon l'une des revendications 1 à 8, **caractérisé en ce que** l'élément de commutation (12) sert d'élément capteur pour un capteur (44) destiné à déterminer les positions de commutation de l'embrayage (4).
